# FASCICULE DE BREVET EUROPEEN

(11) **EP 4 479 638 B1**
(45) Date de publication et mention de la délivrance du brevet: **29.04.2026**
(21) Numéro de dépôt: 23702354.4
(22) Date de dépôt: 02.02.2023
(51) Int. Cl.: F01P 11/04, F16L 33/00, F02M 1/00, B60H 1/00, F02M 35/10, F16L 33/30

(54) **PROCÉDÉ DE FABRICATION D'UN CIRCUIT POUR UNE AUTOMOBILE**
VERFAHREN ZUR HERSTELLUNG EINES KREISLAUFES FÜR EIN KRAFTFAHRZEUG
METHOD FOR PRODUCING A CIRCUIT FOR A MOTOR VEHICLE

(30) Priorité: 18.02.2022 FR 2201437
(43) Date de publication de la demande: 25.12.2024
(73) Titulaire: Renault s.a.s, 92100 Boulogne Billancourt (FR)
(72) Inventeur: DEBROIS, Olivier, 47008 Valladolid (ES)
(86) Numéro de dépôt international: PCT/EP2023/052499
(87) Numéro de publication internationale: WO 2023/156207

(56) Documents cités:
- WO-A1-2018/108887
- CN-U- 202 791 064
- FR-A1- 2 722 839
- FR-A1- 3 089 000

## Description

L'invention concerne un procédé de fabrication d'un circuit d'écoulement d'un fluide comportant des premier et second tubes.

L'invention concerne également un circuit d'écoulement réalisé par la mise en œuvre de ce procédé de fabrication de premier et second tubes, un tel circuit étant destiné à une installation de refroidissement d'un composant d'un groupe motopropulseur ou à une installation de ventilation, de chauffage et/ou de climatisation, ou à l'alimentation en air d'un moteur. L'invention concerne enfin un véhicule automobile équipé d'un tel circuit selon l'invention.

Les véhicules automobiles comprennent des composants fonctionnels tels qu'un groupe motopropulseur thermique, hybride ou électrique qui requiert pour son fonctionnement, un management thermique et/ou un apport fluidique, par exemple de l'air. Le management thermique permet d'un côté un chauffage visant l'atteinte accélérée de la température nominale de fonctionnement, d'un autre un refroidissement pour maintenir la pérennité de fonctionnement. Le management thermique est souvent effectué par la voie des échanges thermiques avec l'air ambiant, qu'il soit direct par le biais d'un écoulement d'air ou indirect via un circuit d'écoulement d'un fluide, notamment de type caloporteur, comportant un radiateur. Un des composants fonctionnels d'un groupe motopropulseur peut également nécessiter un fluide pour son fonctionnement, par exemple un flux air circulant vers l'admission d'un moteur à combustion interne.

Les circuits traditionnels comprennent un assemblage de tubes qui doivent répondre à des normes de conception établie pour en garantir la tenue mécanique dans le temps.

Parmi les normes de conception des tubes, il est connu que l'extrémité d'un tube destiné à recevoir une conduite par emmanchement doit comprendre une butée servant de limite à l'emmanchement de la conduite sur le tube, mais aussi de repère visuel au montage de la conduite. C'est ainsi que selon la nature du fluide, mais aussi de paramètre géométrique et dimensionnel des tubes et de conduites, de la nature du matériau utilisé à leur fabrication, il a été établi des normes garantes d'une qualité d'assemblage. De telles normes visent à éviter les fuites de fluide à la jonction du tube et de la conduite.

Il a été relevé comme inconvénient que la réalisation de la butée sur le tube est spécifique à l'usage particulier du circuit d'écoulement du fluide de sorte qu'il devient impossible de généraliser un tube à au moins un autre usage. Cela engendre donc des couts importants pour la fabrication des tubes de dimensions différentes, ou de matériaux différents.

Le document CN202791064U décrit un procédé de fabrication d'un circuit de fluide selon l'art antérieur.

La présente invention s'inscrit dans ce contexte et vise à résoudre les inconvénients susnommés en proposant un procédé de fabrication d'un circuit d'écoulement d'un fluide qui puisse être appliqué quel que soit l'usage du circuit, ce qui réduit les coûts de fabrication sorte à être adaptée à une grande variété de circuits d'écoulement de fluide.

L'invention concerne un procédé de fabrication d'un circuit de fluide comportant un premier tube et un second tube, chaque tube ayant une extrémité libre destinée à la fixation d'un conduit, notamment d'un conduit déformable, comprenant une étape préalablement de fabrication et d'approvisionnement d'au moins un tube, une étape de sélection de la norme de conception prédéterminée à appliquer pour définir la distance d'emmanchement entre l'extrémité libre du tube et un moyen de butée axiale, une étape de réalisation dudit moyen de butée axiale relativement à l'au moins un tube, notamment auxdits premier et second tubes, de telle sorte que l'un des bords transversaux dudit moyen de butée axiale est positionné à la distance de l'extrémité libre du tube.

Le procédé comprend une étape préalablement de fabrication et d'approvisionnement d'un moyen de butée axiale contre lequel le conduit est destiné à venir en appui lors de son emmanchement sur le tube, le moyen de butée axiale étant préférentiellement réalisé dans le matériau du tube, et notamment du type d'une plaque de liaison conformée pour coopérer avec l'au moins un tube. Le fait de dissocier la fabrication du tube dudit moyen de butée permet l'utilisation d'un même tube pour différentes applications, soit différents types de fluide. Cela favorise la communalisation des tubes à diverses applications, ce qui réduit d'autant les couts de fabrication.

Selon le procédé de l'invention, ledit moyen de butée axiale peut être réalisé par une opération de surmoulage d'au moins un tube.

Selon l'invention, le procédé de fabrication d'un circuit de fluide comprend deux tubes adjacents comprend une étape de positionnement du premier tube relativement au second tube, notamment de manière sensiblement parallèle l'un à l'autre. Cela permet de regrouper les points de connexion des conduits aux tubes, ce qui rend le circuit plus compact.

Selon le procédé de l'invention, l'étape de sélection de la norme de conception est réalisée en tenant compte de la typologie de tube, notamment sa géométrie, son dimensionnement et/ou la nature du matériau utilisé à sa fabrication.

Le procédé selon l'invention comprend une étape de solidarisation des tubes entre eux par ledit moyen de butée axiale, est réalisée en opérant une opération de soudure, notamment de soudure par résistance électrique ou par faisceau laser ou par vibrations, ou une opération de surmoulage dudit moyen de butée axiale sur au moins un tube.

L'invention a aussi trait à un circuit de fluide qui se caractérise par le fait qu'il est réalisé par la mise en œuvre du procédé susmentionné et qu'un fluide, notamment de l'air, ou qu'un fluide caloporteur ou réfrigérant est destiné à circuler au travers d'au moins un ensemble formé d'un tube et d'un conduit emmanché sur le tube de manière que le conduit est placée en appui contre le moyen de butée axiale des tubes, notamment un bord transversal d'une plaque formant ledit moyen de butée axiale.

Le circuit selon l'invention peut comprendre des premier et second tubes pour partie positionnés parallèlement l'un à côté de l'autre, avec un écart radial qui est maintenu par ledit moyen de butée axiale, un tel écart est compris entre 22 et 30 mm, l'écart étant notamment de 25 mm. Le moyen de butée axiale permet d'ordonner la disposition des premier et second tubes, l'un à proximité de l'autre, de sorte que l'ensemble ainsi réalisé est assimilable à une bride d'interconnexion d'un circuit.

Selon l'invention, ledit moyen de butée axiale est assemblé directement à un support, notamment un groupe motopropulseur ou à un élément de structure d'une caisse d'un véhicule. La plaque formant butée peut ainsi être utilisée à des fins de fixation d'un tube ou d'un ensemble de tubes sur une interface dédiée, par exemple un élément de caisse, voir un élément fonctionnel de la chaine de traction, tel que le moteur par exemple. L'invention a aussi trait à un véhicule, notamment du type d'une automobile, qui comprend un circuit de fluide comportant les caractéristiques susmentionnées et/ou qu'il est réalisé par la mise en œuvre du procédé tel qu'il a été précédemment décrit.

D'autres détails, caractéristiques et avantages ressortiront plus clairement à la lecture de la description détaillée donnée ci-après, à titre indicatif et non limitatif, en relation avec les différents exemples de réalisation illustrés sur l'unique figure.

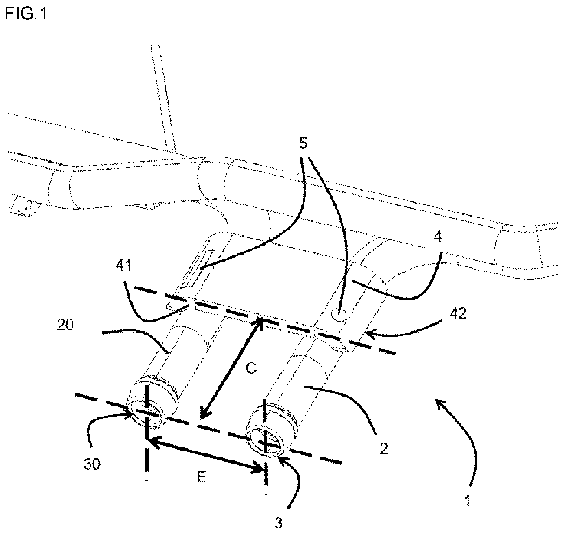

La figure 1 est une représentation schématique d'une partie de circuit de fluide selon un mode de réalisation de l'invention.

La figure 1 illustre schématiquement un exemple de réalisation d'une partie d'un circuit de fluide pour un véhicule, notamment du type d'une automobile.

Un tel circuit de fluide est destiné à la circulation d'un liquide caloporteur, un liquide réfrigérant ou un fluide à l'état gazeux, par exemple de l'air. Un circuit de fluide au travers duquel circule un liquide caloporteur, par exemple de l'eau glycolée, peut être destiné au refroidissement d'un élément fonctionnel d'un groupe motopropulseur, notamment un moteur à combustion. Il peut également comprendre un aérotherme afin de transférer les calories évacuées par le moteur à l'habitacle du véhicule pour le réchauffer. Le circuit de refroidissement du moteur peut être le circuit de chauffage de l'habitacle du fait que le fluide caloporteur circulant dans ce circuit traverse dans cet ordre le moteur à combustion interne et l'aérotherme dans un fonctionnement à température nominale du moteur.

Un circuit de fluide au travers duquel circule un liquide réfrigérant est destiné à un management thermique de l'air par gestion des frigories. Il comprend notamment un évaporateur afin de refroidir un élément fonctionnel, tel qu'une batterie de véhicule électrique, ou l'air destiné par exemple à l'habitacle du véhicule.

Le management thermique de l'élément fonctionnel peut ainsi s'effectuer par une gestion de l'écoulement des fluides.

Un circuit de fluide au travers duquel circule de l'air peut être un circuit d'alimentation en air d'un moteur.

Les circuits de fluide se composent de tubulures et conduites, souples ou rigides, qui sont soit assemblées entre-elles soit directement à une bride d'un élément fonctionnel. L'assemblage requiert le respect de norme de conception afin de garantir une tenue compte tenu des nombreuses situations vibratoires auxquelles ils sont soumis.

Sur la figure 1 est représenté un circuit de fluide 1 comportant un premier tube 2 et un second tube 20.

Les tubes 2 et 20 peuvent être courbés de sorte qu'une portion libre du tube est sensiblement perpendiculaire à une autre portion du circuit qui lui est directement adjacente, et ce pour des raisons d'adaptation du circuit aux contraintes imposées par la géométrie du compartiment moteur.

Selon une variante de réalisation, un premier circuit de fluide comprend l'un des tubes 2, 20, et un second circuit de fluide comprend l'autre des tubes 2, 20. La géométrie des tubes, ainsi que la matière utilisée à sa fabrication peuvent être différentes d'un tube à l'autre. On entend ici par les termes premier circuit et second circuit, des circuits au travers desquels des fluides de natures différentes circulent, tel que cela peut être le cas avec un fluide caloporteur et un fluide réfrigérant.

Selon le mode de réalisation de lala figure 1, les tubes 2, 20 sont compris dans le même circuit de fluide, de sorte qu'ils sont réalisés dans la même matière, et leur extrémité est de géométrie identique. Chacun est destiné à recevoir par emmanchement un conduit (non représenté) qui est destiné à assurer la liaison entre chacun des tubes et un dispositif d'échange thermique, par exemple un équipement au travers duquel pourrait circuler le fluide pour un besoin d'échange thermique.

Chaque tube 2, 20 comprend une extrémité libre 3, 30 qui est destinée à la fixation d'un conduit, notamment d'un conduit déformable. Par conduit déformable, on entend un conduit conçu pour s'adapter à la géométrie du tube afin d'assurer une liaison étanche.

Afin de faciliter l'opération d'emmanchement du conduit sur le tube 2, 20, l'extrémité libre 3, 30 présente un profil conique débouchant axialement sur une collerette dont le diamètre est supérieur à celui du conduit. Une telle conception vise à améliorer la tenue du conduit sur le tube.

La qualité d'assemblage, garant d'une liaison étanche, est grandement fonction de la distance C qui se définit comme étant la distance séparant une butée axiale 4 et l'extrémité libre 3, 30 du tube 2, 20. Cette distance peut en outre être utile à l'utilisation d'un dispositif de serrage du conduit sur un tube. Un collier de serrage (non représenté) peut être utilisé dans ce but.

Chaque tube 2, 20 comprend une butée axiale 4 contre laquelle un conduit emmanché vient en appui afin de respecter des normes d'assemblage préétablies. Un conduit emmanché sur un tube 2, 20 doit ainsi être disposé en appui de la butée axiale 4, ce qui permet de contrôler visuellement la qualité de l'assemblage ainsi réalisé.

Sur la figure 1, il est représenté un mode de réalisation préféré de la butée axiale 4, laquelle présente ici un profil en forme de plaque.

L'agencement de la plaque et des tubes selon un recouvrement des deux tubes par la plaque permet de relier entre eux deux tubes adjacents. Néanmoins, il peut être envisagé en tant que variante de réalisation l'agencement d'une plaque et d'un tube de telle sorte que le tube comprend un plaque dédiée formant butée.

Qu'il y ait un tube, ou plusieurs tubes 2, 20, la plaque est fixée à au moins l'un des tubes afin de définir une butée axiale à chacun des tubes. La plaque peut être réalisée par moulage ou emboutissage, selon la matière utilisée à la réalisation du tube. La plaque peut être fixée à au moins un tube en métal, notamment en aluminium, par le biais d'au moins un point de soudure, notamment par soudo-brasage. La plaque peut être surmoulée sur au moins un tube, ce dernier pouvant être réalisé en matière plastique.

Sur lafigure 1, la butée axiale 4 est une plaque qui relie chacun des tubes entre eux, en s'étendant de manière sensiblement transversale. Ainsi disposée sur les tubes, la plaque peut s'étendre de manière tangente à chacun des tubes 2, 20.

Selon une variante de réalisation non représentée, la plaque pourrait s'étendre de manière radiale entre les tubes 2, 20.

La plaque peut être de profil sensiblement rectangulaire. La plaque comprend des bords transversaux avant et arrière sensiblement parallèles l'un à l'autre. Le bord transversal avant s'étend radialement au tube 2, 20 de sorte qu'il forme la butée axiale 4 au conduit.

La plaque peut être de forme complexe, notamment contrainte géométriquement à l'environnement dans lequel elle est destinée à se placer, mais comprend un bord transversal avant destiné à former une butée axiale 4 au conduit.

La distance d'emmanchement C du conduit sur le tube 2, 20 est ainsi définit par la position relative de la plaque sur le tube. La distance d'emmanchement C'est alors établie entre l'extrémité libre 3, 30 des tubes 2, 20 et le bord transversal 41 de la plaque, le bord étant disposé au regard de l'extrémité libre 3, 30.

Différents abaques de conception établissent la règle à respecter quant au positionnement de la butée axiale sur le tube 2, 20. De tels abaques ont été préalablement définis en tenant compte de paramètres, tels que par exemple le diamètre du tube, le matériau utilisé à la fabrication du tube, mais aussi la nature du fluide circulant dans la tube, ainsi que la pression du fluide à l'intérieur du circuit. De tels abaques posent les règles de conception à suivre afin de garantir une tenue pérenne de l'emmanchement d'un conduit sur un tube.

Ainsi, pour une même géométrie de tube, la distance d'emmanchement C peut ainsi être une distance C1 pour un tube réalisé en alu et C2 pour un tube réalisé en matière plastique, avec C1 différent de C2 par exemple. Dans l'hypothèse d'un tube 2 réalisé dans une matière et d'un tube 20 adjacent réalisé dans une autre matière, la plaque peut être un polygone ayant plusieurs bords transversaux successifs pour définir une butée axiale C1 pour le tube 2 et une butée axiale C2 pour le tube adjacent 20. La plaque peut avoir un bord avant présentant des créneaux successifs pour définir les distances d'emmanchement distinctes C1, C2 pour les tubes 2, 20 adjacents de conception différentes.

Selon la conception à chevauchement de la plaque sur les tubes, elle vient sensiblement à recouvrement partiel des tubes 2, 20, qui s'étendent au moins pour partie de manière adjacente l'un à côté de l'autre, préférentiellement l'un parallèle à l'autre.

Afin de parfaire la liaison entre les tubes 2, 20 et la plaque formant la butée axiale 4, les bords latéraux 42 de la plaque, s'étendent le long des tubes. Chaque bord latéral 42 vient partiellement à recouvrement direct d'un tube de sorte que le bord latéral 42 présente un profil incurvé qui suit la géométrie du tube qu'il recouvre. Cela tend à améliorer la fixation de l'ensemble. Du fait de cette conception particulière de la plaque, l'écart E entre les tubes 2, 20 peut ainsi être réalisé par la position des tubes en appui contre les bords latéraux 42 tombés de la plaque.

Du fait de la liaison mécanique de tubes 2, 20 assuré par la plaque, cette dernière présente une surface centrale qui est sensiblement plane. La surface centrale peut être un moyen de fixation d'au moins un circuit de fluide à un support, par exemple la caisse d'un véhicule.

Selon la typologie de tubes 2, 20, plus particulièrement selon le matériau utilisé à la fabrication des tubes et de la plaque, la fixation peut être assurée par une opération de soudage, notamment par point ou ligne de soudure 5.

Le procédé de fabrication qui permet de réaliser le circuit de fluide précédemment détaillé va à présent être décrit.

Le procédé de fabrication d'un circuit de fluide comportant au moins un tube ayant une extrémité libre 3, 30 comprend une étape préalablement de fabrication et d'approvisionnement d'au moins un tube 2, 20, et dudit moyen de butée axiale 4 contre lequel le conduit est destiné à venir en appui lors de son emmanchement sur le tube.

Selon le procédé de fabrication, ledit moyen de butée axiale 4 est de préférence réalisé dans le matériau du tube, ce qui tend à faciliter l'assemblage de l'ensemble.

Le procédé comprend ensuite une étape de sélection de la norme de conception prédéterminée, telle qu'elle est enregistrée dans des abaques de conception, une telle norme de conception devant être appliquée pour sélectionner une distance d'emmanchement C entre l'extrémité libre 3, 30 du tube 2, 20 et ledit moyen de butée axiale 4, qui est dans un mode de réalisation préféré du type d'une plaque, pouvant être qualifié de plaque de fixation étant donné qu'elle est conformée pour coopérer avec l'au moins un tube et un support pour la fixation du circuit.

Le procédé comprend ensuite une étape de positionnement dudit moyen de butée axiale 4 relativement à l'au moins un tube, de telle sorte que l'un des bords transversaux 41 dudit moyen de butée axiale 4 s'étendant au regard de l'extrémité libre 3, 30 du tube est positionné à la distance C de de cette extrémité libre.

Dans le mode de conception particulier du circuit de fluide comprenant deux tubes adjacents 2, 20, notamment des premiers et seconds tubes, le procédé comprend une étape de positionnement du premier tube 2 relativement au second tube 20. Préférentiellement les tubes 2, 20 sont disposés de manière sensiblement parallèle l'un à l'autre.

Une étape essentielle du procédé réside dans l'étape de sélection de la norme de conception, une telle sélection étant réalisée en tenant compte de la typologie de tube, notamment sa géométrie, son dimensionnement et/ou la nature du matériau utilisé à sa fabrication.

L'étape de positionnement dudit moyen de butée axiale 4 relativement à l'au moins un tube 2, 20, notamment auxdits premier et second tubes 2, 20, consiste en une disposition dudit moyen de butée axiale 4 de manière qu'au moins un de ses bords transversaux 41 s'étende radialement au tube, notamment de manière sensiblement perpendiculaire au tubes, de telle sorte que la butée axiale 41 à l'emmanchement du conduit sur le tube 2, 20, est réalisée par le bord transversal 41.

Dans le cas d'une plaque présentant des bords latéraux tombés, les tubes 2, 20 sont positionnés en appui contre la partie concave de ces bords tombés.

L'une des étapes du procédé consiste ensuite à solidariser le tube 2, 20 au dit moyen de butée axiale 4. Dans le cas où plusieurs tubes 2, 20 sont utilisés, ils peuvent alors être solidarisés entre eux par l'intermédiaire dudit moyen de butée axiale 4.

L'opération de solidarisation peut s'effectuer via une opération de fixation, notamment de soudure par résistance électrique ou par faisceau laser ou par vibrations, lorsque la matière utilisée à la fabrication de la plaque et/ou des tubes est de l'acier.

L'opération de solidarisation peut s'effectuer via un surmoulage dudit moyen de butée axiale 4 sur le tube ou les tubes 2, 20.

En réalisation le procédé de fabrication susmentionné, on obtient un circuit de fluide dans lequel peut circuler un fluide de type gazeux, notamment de l'air, ou un fluide caloporteur ou réfrigérant. Du fait de la conception du circuit, le fluide peut circuler au travers d'au moins un ensemble formé d'un tube et d'un conduit emmanché sur le tube, de telle sorte que le conduit est placé en appui contre le moyen de butée axiale 4, notamment 2 contre le bord transversal 41 de la plaque. Le fait de placer le conduit en appui contre la butée axiale 41 garantit une qualité de l'étanchéité de la liaison. Avantageusement, le contrôle qualité s'effectue visuellement et de manière rapide.

Le circuit de fluide comprenant des premier et second tubes 2, 20 est de réalisation compacte étant donné que pour partie les tubes sont positionnés parallèlement l'un à côté de l'autre, avec un écart radial E qui est maintenu par ledit moyen de butée axiale 4. A titre d'exemple, un tel écart E est compris entre 22 et 30 mm, l'écart étant notamment de 25 mm, ce qui permet d'avoir un ensemble compact et résistant à une large gamme de régimes vibratoires, notamment ceux induits par le fonctionnement d'un moteur à combustion.

La plaque formant ledit moyen de butée axiale permet avantageusement l'union d'au moins deux tubes ainsi que la liaison optimale d'un tube à un conduit par la mise en appui du conduit contre la butée axiale. Le contrôle qualité de l'assemblage s'en trouve en outre grandement facilité.

Du fait de la conception particulière dudit moyen de butée axiale 4, le ou les tubes du circuit de fluide peut être assemblé à un support, notamment un groupe motopropulseur ou à un élément de structure d'une caisse d'une véhicule par l'intermédiaire de la plaque. Cette dernière réalise à la fois le maintien des tubes entre eux mais aussi la fixation des tubes à un support. A titre d'exemple, la plaque peut être rapportée vissée sur un support.

La fabrication du circuit de fluide par le procédé est particulièrement avantageuse pour une application aux véhicules, notamment aux automobiles. Un tel procédé permet en outre de communaliser les tubes à diverses typologies du circuit, tout en respectant les normes de conception préétablies pour l'assemblage d'un conduit à un tube selon la typologie de circuit.

En outre, l'usage de la plaque dudit moyen de butée axiale 4 permet de s'affranchir de l'ajout d'un moyen de fixation du circuit, cette fonction étant ici réalisée directement par ledit moyen de butée axiale 4. Le circuit comprenant au moins un tube et la plaque formant butée axiale est plus aisément intégrable dans un véhicule, notamment dans une compartiment moteur contraint par la quantité élevée de pièces qu'il contient.

## Revendications

1. Procédé de fabrication d'un circuit (1) de fluide comportant un premier tube (2) et un second tube (20) adjacents, chaque tube ayant une extrémité libre (3, 30) destinée à la fixation d'un conduit, notamment d'un conduit déformable,
**caractérisé en ce que** le procédé comprend
- une étape préalablement de fabrication et d'approvisionnement d'au moins un tube (2, 20),
- une étape de sélection d'une distance d'emmanchement (C) parmi plusieurs distances préétablies d'emmanchement, entre l'extrémité libre (3, 30) du tube (2, 20) et un moyen de butée axiale (4), et
- une étape de réalisation dudit moyen de butée axiale (4) relativement à l'au moins un tube, notamment auxdits premier et second tubes (2, 20), de telle sorte que l'un des bords transversaux (41) dudit moyen de butée axiale (4) est positionné à la distance (C) de l'extrémité libre (3, 30) du tube
- une étape de positionnement du premier tube (2) relativement au second tube (20), notamment de manière sensiblement parallèle l'un à l'autre,
- une étape de solidarisation des tubes (2, 20) entre eux par ledit moyen de butée axiale (4), réalisée en opérant une opération de soudure, notamment de soudure par résistance électrique ou par faisceau laser ou par vibrations, ou une opération de surmoulage dudit moyen de butée axiale (4) sur au moins un tube (2, 20).

2. Procédé selon la revendication précédente, **caractérisé en ce qu'**il comprend une étape préalablement de fabrication et d'approvisionnement d'un moyen de butée axiale (4) contre lequel le conduit est destiné à venir en appui lors de son emmanchement sur le tube, le moyen de butée axiale (4) étant préférentiellement réalisé dans le matériau du tube, et notamment du type d'une plaque de liaison conformée pour coopérer avec l'au moins un tube.

3. Procédé selon la revendication 1 ou 2, **caractérisé en ce que** l'étape de sélection de la distance d'emmanchement (C) est réalisée en tenant compte de la typologie de tube, notamment sa géométrie, son dimensionnement et/ou la nature du matériau utilisé à sa fabrication.

4. Circuit (1) de fluide réalisé par la mise en œuvre du procédé selon l'une quelconque des revendications précédentes et en ce qu'un fluide de type gazeux, notamment de l'air, ou qu'un fluide caloporteur ou réfrigérant est destiné à circuler au travers d'au moins un ensemble formé d'un tube et d'un conduit emmanché sur le tube de manière que le conduit est placée en appui contre le moyen de butée axiale des tubes, notamment un bord transversal d'une plaque formant ledit moyen de butée axiale (4), **caractérisé en ce qu'**il comprend des premier et second tubes (2, 20) pour partie positionnés parallèlement l'un à côté de l'autre, avec un écart radial (E) qui est maintenu par ledit moyen de butée axiale (4), un tel écart (E) est compris entre 22 et 30 mm, l'écart étant notamment de 25 mm.

5. Circuit selon la revendication précédente, **caractérisé en ce que** ledit moyen de butée axiale (4) est assemblé directement à un support, notamment un groupe motopropulseur ou à un élément de structure d'une caisse d'un véhicule.

6. Véhicule, notamment du type d'une automobile, **caractérisé en ce qu'**il comprend un circuit (1) de fluide comportant les caractéristiques des revendications 4 ou 5.

## Patentansprüche

1. Verfahren zur Herstellung eines Fluidkreislaufs (1) mit einem ersten Rohr (2) und einem zweiten Rohr (20), die nebeneinander angeordnet sind, wobei jedes Rohr ein freies Ende (3, 30) aufweist, das zur Befestigung einer Leitung, insbesondere einer verformbaren Leitung, bestimmt ist,
**dadurch gekennzeichnet, dass** das Verfahren Folgendes aufweist:
- einen vorbereitenden Schritt zum Herstellen und Beschaffen von mindestens einem Rohr (2, 20),
- einen Schritt zum Auswählen einer Aufstecklänge (C) aus mehreren vorgegebenen Aufstecklängen zwischen dem freien Ende (3, 30) des Rohrs (2, 20) und einem axialen Anschlagmittel (4) und
- ein Schritt zum Anordnen des axialen Anschlagmittels (4) relativ zu dem mindestens einen Rohr, insbesondere zu dem ersten und dem zweiten Rohr (2, 20), derart, dass eine der Querkanten (41) des axialen Anschlagmittels (4) in einem Abstand (C) zum freien Ende (3, 30) des Rohrs positioniert ist,
- ein Schritt zum Ausrichten des ersten Rohrs (2) relativ zum zweiten Rohr (20), insbesondere so, dass diese im Wesentlichen parallel zueinander liegen,
- einen Schritt zum Verbinden der Rohre (2, 20) untereinander mittels des axialen Anschlagmittels (4), der durch einen Schweißvorgang, insbesondere durch Widerstandsschweißen, Laserschweißen oder Vibrationsschweißen, oder durch einen Umspritzvorgang des axialen Anschlagmittels (4) an mindestens einem Rohr (2, 20) durchgeführt wird.

2. Verfahren nach dem vorhergehenden Anspruch, **dadurch gekennzeichnet, dass** es einen vorbereitenden Schritt zum Herstellen und Beschaffen eines axialen Anschlagmittels (4) aufweist, an dem die Leitung beim Aufstecken auf das Rohr zur Anlage kommen soll, wobei das axiale Anschlagmittel (4) vorzugsweise aus dem Material des Rohrs besteht und insbesondere die Form einer Verbindungsplatte aufweist, die so geformt ist, dass sie mit dem mindestens einem Rohr zusammenwirkt.

3. Verfahren nach Anspruch 1 oder 2, **dadurch gekennzeichnet, dass** der Schritt zum Auswählen der Aufstecklänge (C) unter Berücksichtigung der Rohrtypologie, insbesondere seiner Geometrie, seiner Abmessungen und/oder der Art des zu seiner Herstellung verwendeten Materials, durchgeführt wird.

4. Fluidkreislauf (1), der durch die Anwendung des Verfahrens nach einem der vorhergehenden Ansprüche hergestellt wird, **dadurch gekennzeichnet, dass** ein gasförmiges Fluid, insbesondere Luft, oder ein Wärmeträger- oder Kältemittel dazu bestimmt ist, durch mindestens eine Baugruppe zu zirkulieren, die aus einem Rohr und einer so auf das Rohr aufgesteckten Leitung besteht, dass die Leitung an dem axialen Anschlagmittel der Rohre anliegt, insbesondere an einer Querkante einer Platte, die das genannte axiale Anschlagmittel (4) bildet, **dadurch gekennzeichnet, dass** sie ein erstes und ein zweites Rohr (2, 20) aufweist, die teilweise parallel nebeneinander angeordnet sind, mit einem radialen Abstand (E), der durch das axiale Anschlagmittel (4) aufrechterhalten wird, wobei dieser Abstand (E) zwischen 22 und 30 mm liegt und insbesondere 25 mm beträgt.

5. Kreislauf nach dem vorhergehenden Anspruch, **dadurch gekennzeichnet, dass** das axiale Anschlagmittel (4) direkt an einer Halterung, insbesondere einem Antriebsstrang, oder an einem Strukturbauteil einer Fahrzeugkarosserie befestigt ist.

6. Fahrzeug, insbesondere vom Typ eines Kraftfahrzeugs, **dadurch gekennzeichnet, dass** es einen Fluidkreislauf (1) enthält, der die Merkmale der Ansprüche 4 oder 5 aufweist.

## Claims

1. Method for manufacturing a fluid circuit (1) including a first tube (2) and a second tube (20) that are adjacent, each tube having a free end (3, 30) intended for fastening a pipe, notably a deformable pipe, **characterized in that** the method comprises:
- a prior step of manufacturing and supplying at least one tube (2, 20),
- a step of selecting an engagement distance (C) from several preestablished engagement distances between the free end (3, 30) of the tube (2, 20) and an axial stop means (4), and
- a step of forming said axial stop means (4) relative to the at least one tube, notably to said first and second tubes (2, 20), such that one of the transverse edges (41) of said axial stop means (4) is positioned at a distance (C) from the free end (3, 30) of the tube
- a step of positioning the first tube (2) relative to the second tube (20), notably substantially parallel to one another,
- a step of securing the tubes (2, 20) to each other using said axial stop means (4), by welding, notably electric resistance welding or laser-beam welding or vibration welding, or overmoulding said axial stop means (4) onto at least one tube (2, 20).

2. Method according to the preceding claim, **characterized in that** it comprises a prior step of manufacturing and supplying an axial stop means (4) against which the pipe is intended to bear when it is being engaged on the tube, the axial stop means (4) preferably being made of the same material as the tube, and notably being a connecting plate configured to cooperate with the at least one tube.

3. Method according to Claim 1 or 2, **characterized in that** the step of selecting the engagement distance (C) is carried out taking into account the tube type, notably its geometry, its dimensioning and/or the nature of the material used in its manufacture.

4. Fluid circuit (1) produced by implementing the method according to any one of the preceding claims and in that a gaseous fluid, notably air, or a heat transfer fluid or refrigerant is intended to flow through at least one assembly formed of a tube and a pipe engaged on the tube in such a way that the pipe is arranged to bear against the axial stop means of the tubes, notably a transverse edge of a plate forming said axial stop means (4), **characterized in that** it comprises first and second tubes (2, 20) partially positioned parallel next to one another, with a radial gap (E) that is maintained by said axial stop means (4), such a gap (E) is between 22 mm and 30 mm, the gap being notably 25 mm.

5. Circuit according to the preceding claim, **characterized in that** said axial stop means (4) is joined directly to a support, notably a power train, or to a structural element of a body of a vehicle.

6. Vehicle, notably a motor vehicle, **characterized in that** it comprises a fluid circuit (1) including the features of Claim 4 or 5.
